# EUROPEAN PATENT APPLICATION

(11) **EP 4 390 886 A1**
(43) Date of publication of application: **26.06.2024**
(21) Application number: 23213008.8
(22) Date of filing: 29.11.2023
(51) Int. Cl.: G08B 13/196, H04N 7/18, H04N 23/61, H04N 23/611, H04N 23/68, H04N 23/90, G06F 3/01

(54) **INFORMATION PROCESSING APPARATUS, IMAGE CAPTURING APPARATUS, INFORMATION PROCESSING METHOD, AND STORAGE MEDIUM**

(30) Priority: 23.12.2022 JP 2022207380
(71) Applicant: CANON KABUSHIKI KAISHA, Tokyo 146-8501 (JP)
(72) Inventor: MYOJIN, Rie, Tokyo, 146-8501 (JP); SENZAKI, Hiroaki, Tokyo, 146-8501 (JP); NAKAYAMA, Hirotsugu, Tokyo, 146-8501 (JP); TAKITA, Soshi, Tokyo, 146-8501 (JP); KOKUTA, Nanami, Tokyo, 146-8501 (JP); TSUJI, Keitaro, Tokyo, 146-8501 (JP); HOSHINO, Kota, Tokyo, 146-8501 (JP)
(74) Representative: TBK

(57) **Abstract**

An information processing apparatus capable of switching an imaging unit according to the intention of a subject or the like comprises a determination unit configured to determine whether a subject has made a predetermined movement based on images from at least one of a plurality of image capturing units, and a selection unit configured to select an image from a predetermined image capturing unit that has been associated with the predetermined movement from among images from the plurality of the image capturing units and output to a display unit or a recording unit, in a case in which it has been determined by the determination unit that the predetermined movement has been performed.

## Description

### BACKGROUND OF THE INVENTION

### Field of the Invention

The present invention relates to an information processing apparatus that handles images of an image capturing unit, an image capturing apparatus, an information processing method, a storage medium, and the like.

### Description of the Related Art

Conventionally, there exists a technique for multi-angle distribution that performs moving image distribution from a plurality of viewpoints by switching between a plurality of connected cameras. Normally, the switching is performed by a dedicated operator. However, in recent years, there exists a case in which an individual broadcaster, who also becomes the subject of the video, performs the moving image distribution operation themself. In such a case, performing the switching operation while being the subject is not easy.

In contrast, International Publication No. WO2019/078248 discloses a configuration in which dedicated cameras are disposed in sports stadiums and the like for the purpose of determining the objects of attention of spectators. In this configuration, the video is switched so as to display the object that the spectators are focusing on.

However, in International Publication No. WO2019/078248, it was necessary to provide a plurality of dedicated cameras at a plurality of locations within the stadium, separate from the cameras used for video creation, for the purpose of detecting an object that the spectators are focusing on.

### SUMMARY OF THE INVENTION

An information processing apparatus according to one aspect of the present invention comprises at least one processor or circuit configured to function as a determination unit configured to determine whether a subject has made a predetermined movement based on images from at least one of a plurality of image capturing units, and a selection unit configured to select an image from a predetermined image capturing unit that has been associated with the predetermined movement from among images from the plurality of the image capturing units and output to a display unit or a recording unit, in a case in which it has been determined by the determination unit that the predetermined movement has been performed.

Further features of the present invention will become apparent from the following description of exemplary embodiments with reference to the attached drawings.

### BRIEF DESCRIPTION OF THE DRAWINGS

FIG. 1 is a diagram showing an example of a connection relationship between a plurality of cameras and an image capturing control apparatus according to a First Embodiment of the present invention.
FIG. 2 is a functional block diagram showing a configuration example of an image capturing control apparatus 201 according to the First Embodiment of the present invention.
FIG. 3 is a functional block diagram showing a configuration of a camera 300, which is an example of an image capturing apparatus according to the First Embodiment.
FIG. 4 is a functional block diagram related to data processing of video and audio of an image capturing control apparatus according to the First Embodiment.
FIG. 5 is a diagram showing a display example of an image capturing control apparatus according to the First Embodiment.
FIG. 6 is a flowchart showing an operation example of video switching when a predetermined movement has been performed in the information processing method according to the First Embodiment.
FIGS. 7A to 7E are diagrams for explaining an example of a case in which a determination is made based on a hand gesture.
FIGS. 8A to 8C are diagrams for explaining an example of a case in which a determination is made based on a direction of a face.
FIGS. 9A to 9C are diagrams for explaining an example of a case in which a determination is made based on a movement in a motion direction.
FIG. 10 is a diagram for explaining an example in a case in which there is a camera that has been registered for each orientation of the face.
FIG. 11 is a diagram explaining an example of video switching in a case in which there is a camera that has been registered for each orientation of the face.
FIG. 12 is a diagram for explaining an example in a case in which there is no camera registered for each orientation of the face.
FIG. 13A and FIG. 13B are diagrams for explaining an example of switching video between two cameras in a case in which there is no camera that has been registered for each orientation of the face.
FIG. 14A and FIG. 14B are diagrams for explaining an example of switching video between three cameras in a case in which there is no camera that has been registered for each orientation of the face.
FIG. 15 is a flowchart showing an operation example of initial setting registration according to the First Embodiment.
FIG. 16 is a diagram for explaining an example of a UI for registering a "predetermined movement".
FIG. 17 is a diagram for explaining an example of a case in which a "hand gesture" is registered in the UI for registering a "predetermined movement".
FIG. 18 is a diagram for explaining an example of a "predetermined movement" registration UI face direction.
FIG. 19 is a diagram for explaining an example of a UI for manual registration of a detection camera.
FIG. 20 is a diagram explaining an example of specifying a camera in the "predetermined movement" registration UI.
FIG. 21 is a diagram for explaining an example where no camera is designated in the UI for registering a "predetermined movement".
FIG. 22 is a flowchart for explaining processes for selecting a detection camera.
FIG. 23 is a diagram for explaining an example of the parts required for detection for each "predetermined movement".
FIGS. 24A to 24D are diagrams for explaining a layout diagram of cameras and examples of video captured by each camera.
FIG. 25 is a flowchart explaining an operation example of detecting a "predetermined movement" on the image capturing apparatus side according to a Second Embodiment.
FIG. 26 is a flowchart showing an example of implementing a predetermined operation in a case in which a video selection has been made on the image capturing apparatus side according to the Second Embodiment

### DESCRIPTION OF THE EMBODIMENTS

Hereinafter, with reference to the accompanying drawings, favorable modes of the present invention will be described using Embodiments. In each diagram, the same reference signs are applied to the same members or elements, and duplicate description will be omitted or simplified.

### (First Embodiment)

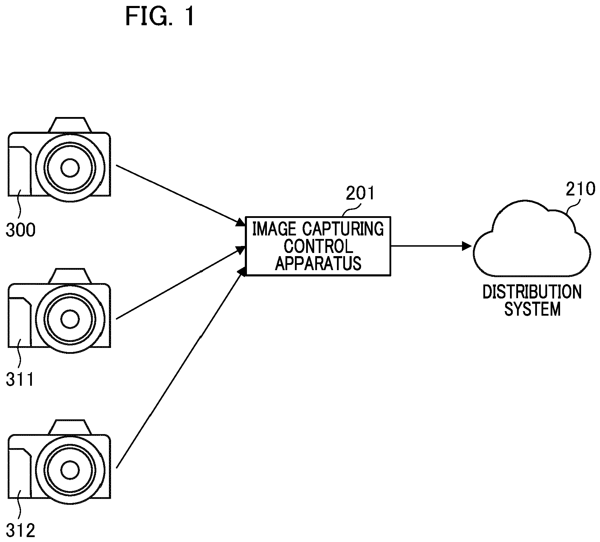

FIG. 1 is a diagram showing an example of a connection relationship between a plurality of cameras and an image capturing control apparatus according to a First Embodiment of the present invention. It should be noted that a camera of the First Embodiment functions as image capturing unit for acquiring an image of a subject.

A plurality of cameras 300, 311, 312 are connected to an image capturing control apparatus 201 by wired or wireless connections. In the case of a wireless connection, a camera and the image capturing control apparatus are directly connected by P2P, or a connection is established via an IP network. Image data or the like, including moving images, still images, and audio data, is transmitted from each camera to the image capturing control apparatus 201. It should be noted that the image data and the like may also include audio analysis data, subtitle data, and the like.

A distribution system 210 is a service or system that performs simultaneous distribution of image data or the like to a plurality of viewers by receiving image data or the like from the image capturing control apparatus 201. A distribution system exists in various forms, depending on the intended purpose and application thereof, such as entertainment, promotion, training, and the like. Reference numeral 211 denotes an image capturing unit for capturing images of a subject. The actions of the subject can also be analyzed by using images that have been acquired by the image capturing unit 211.

The image capturing control apparatus 201 either leaves the image data and the like received from a camera in its original form or, after performing image processing on the image data, performs conversion of the image data into a data format suitable for distribution, and then transmits the converted data to the distribution system 210. The image capturing control apparatus 201 also has the role of determining which image data and the like of a camera from among a plurality of connected cameras is to be transmitted to the distribution system, and functions as an information processing apparatus.

It should be noted that the image capturing control apparatus 201 may be a smartphone, or a tablet device or personal computer or the like provided with what is termed image capturing capability. Furthermore, it may also be possible to use the image capturing capabilities within the image capturing control apparatus 201 to determine the actions and the like of the subject. The image capturing control apparatus 201, as an information processing apparatus, may be mounted on any of the image capturing apparatuses, for example cameras 300, 311, 312, and the like.

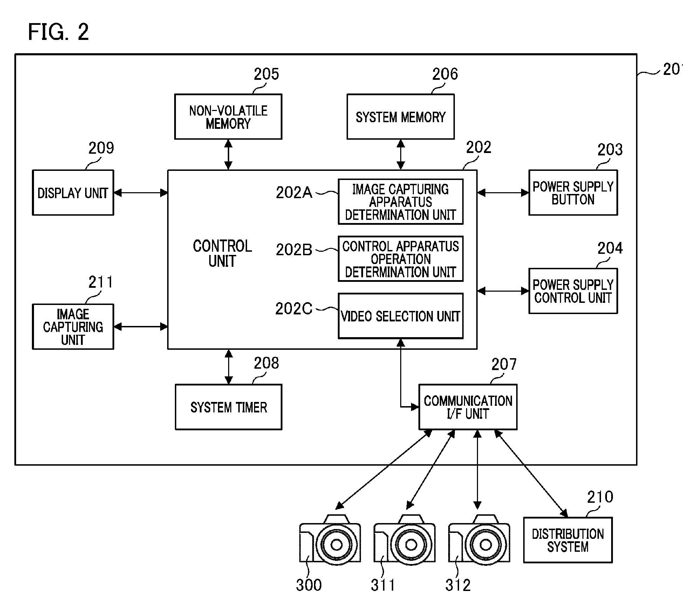

FIG. 2 is a functional block diagram showing a configuration example of the image capturing control apparatus 201 according to the First Embodiment of the present invention. It should be noted that a portion of the functional blocks that are shown in FIG. 2 are implemented by causing a CPU or the like serving as a computer (not shown) included in the image capturing control apparatus 201 to execute a computer program that has been stored in a memory serving as a storage medium.

However, a portion or all of these may also be made so as to be realized by using hardware. An application-specific integrated circuit (ASIC), a processor (reconfigurable processor, DSP), or the like can be used as the hardware.

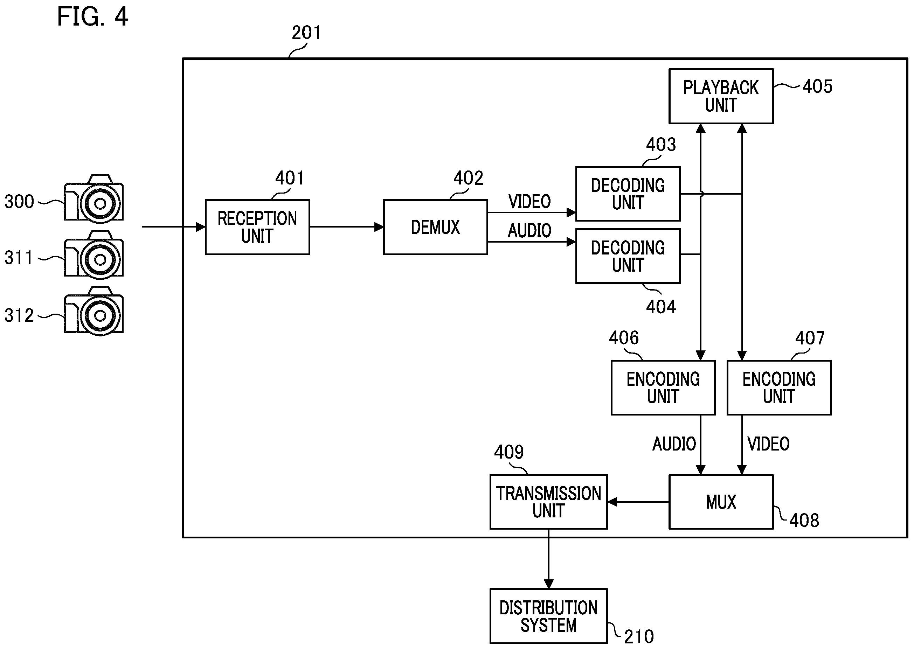

In addition, each of the functional blocks that are shown in FIG. 2 do not need to be encased in the same body, and may also be configured by separate devices that have been connected to each other via a signal path. Note that the above explanation with respect to FIG. 2 similarly applies to FIG. 4.

A non-volatile memory 205 is an electrically erasable/recordable memory, for which, for example, a flash ROM or the like is used. In the non-volatile memory 205, constants, programs, and the like for operation of a control unit 202 are stored.

"Programs" here refers to programs for executing various types of flow charts to be described below in the First Embodiment. The non-volatile memory 205 can also store various types of information, including setting information and moving image data input from a camera.

The control unit 202 includes a CPU that serves as a computer, and performs control of the entire image capturing control apparatus 201 by executing a computer program that has been recorded in the non-volatile memory 205, as well as performing each of the processes of the flowchart described below. A RAM, for example, is used for a system memory 206, in which constants and variables for operating the control unit 202 are saved, and programs read from the non-volatile memory 205, and the like, are developed.

The control unit 202 includes an image capturing apparatus determination unit 202A, a control apparatus operation determination unit 202B, and a video selection unit 202C, and performs the selection of the camera to be used for distribution and moving image creation based on the video data and camera information obtained through a communication I/F unit 207.

A power supply button 203 is an operation member that switches between the power supply on state and the power supply off state of the image capturing control apparatus 201. A power supply control unit 204 is configured by a DC-DC converter, a switching circuit for switching between blocks to be energized, and the like.

The power supply control unit 204 controls the DC-DC converter based on an instruction from the control unit 202, and supplies a required voltage to each circuit within the image capturing control apparatus 201 for a required period of time. The power supply control unit 204 also includes a primary battery such as an alkaline battery or a lithium battery, a secondary battery such as a NiCd battery, a NiMH battery, or a Li battery, an AC adapter, and the like.

A system timer 208 is a time-measuring unit for measuring time used in various controls and measuring time according to an internal clock. In the First Embodiment, a liquid crystal display is used as a display unit 209. The display unit 209 may have touch input functionality as a touch screen, and in such a case, the display unit 209 would assume some of the functions of an operation member.

The communication I/F unit 207 is an interface that connects to an external device via wireless or wired means and performs data transmission and reception. A sequence of data transmission and reception is performed via the communication I/F unit 207, which is connected to a plurality of cameras to receive the moving image data and transmit the moving image data to a distribution system 210. The camera 300, the camera 311, and the camera 312 are cameras connected from the outside via the communication I/F unit 207.

The distribution system 210 is a service or system that performs simultaneous distribution of moving images to a plurality of viewers by transmitting a video stream or a moving image file. A connection is performed via the IP network, either by wired or wireless means, by using the communication I/F unit 207.

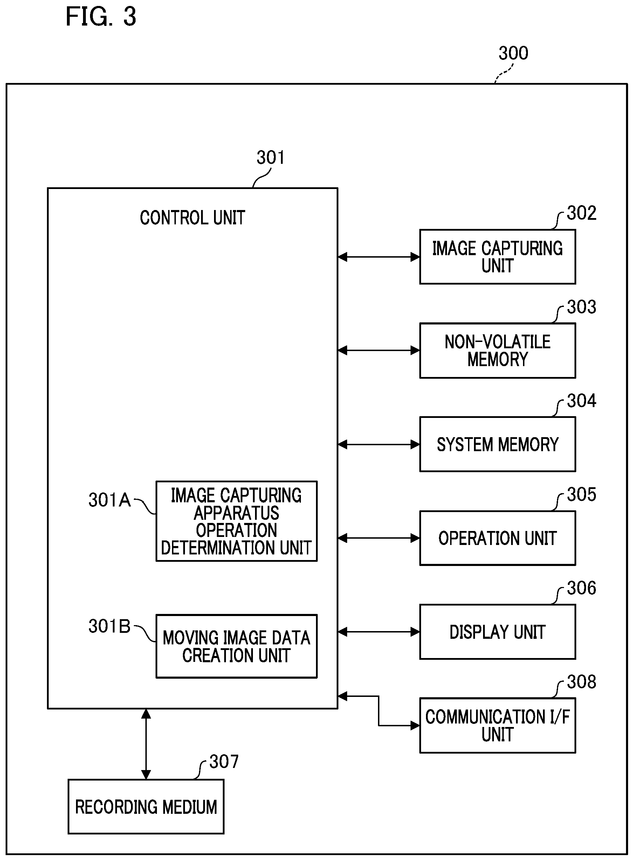

FIG. 3 is a functional block diagram showing a configuration of the camera 300, which is an example of an image capturing apparatus according to the First Embodiment. It should be noted that here, a digital camera is described as one example of an image capturing apparatus. However, the image capturing apparatus is not limited thereto. For example, the image capturing apparatus may be a smartphone, a tablet device provided with what is termed image capturing capability, or a personal computer.

It should be noted that a portion of the functional blocks that are shown in FIG. 3 are implemented by causing a CPU or the like serving as a computer (not shown) included in the camera 300 to execute a computer program that has been stored in a memory serving as a storage medium.

However, a portion or all of these may also be made so as to be realized by using hardware. An application-specific integrated circuit (ASIC), a processor (reconfigurable processor, DSP), or the like can be used as the hardware. In addition, each of the functional blocks that are shown in FIG. 3 do not need to be encased in the same body, and may also be configured by separate devices that have been connected to each other via a signal path.

In FIG. 3, a control unit 301 controls each part of the camera 300 according to signals that have been input, and programs which will be described below. The control unit 301 includes an image capturing apparatus operation determination unit 301A and a moving image data creation unit 301B, and the image capturing apparatus operation determination unit 301A performs a detection of a "predetermined movement".

The moving image data creation unit 301B within a camera creates moving image data from the data captured by an image capturing unit 302, which will be described below, and transmits the moving image data to the outside via a communication I/F unit 308, also to be described below. In place of the control unit 301 controlling the entire apparatus, a plurality of pieces of hardware can control the entire apparatus by sharing processing.

The image capturing unit 302 converts subject light that has been formed by a lens (not shown) into an electrical signal by an image capturing element (not shown), performs various types of image processing, such as noise reduction processing, and then outputs the signal as image data. The captured image data is stored in a buffer memory, and then the control unit 301 performs a predetermined computation on the image data, and the image data is then recorded in a recording medium 307.

A non-volatile memory 303 is an electrically erasable and recordable nonvolatile memory, and stores computer programs described below that are executed by the control unit 301.

A system memory 304 is used as a buffer memory which temporarily stores the image data that has been captured by the image capturing unit 302, an image display memory of a display unit 306, and a work area of the control unit 301.

An operation unit 305 is used to receive instructions that a user issues to the camera 300. The operation unit 305 includes operation members such as a power button for instructing the turning the power supply on/off, a release switch for instructing image capturing, and a playback button for instructing the playback of image data, for example.

The operation unit 305 further includes a touch panel formed on the display unit 306, which will be described below. The release switch includes two switches, SW1 and SW2, that are sequentially turned on by pressing. When the release switch is in a half-pressed state, the switch SW1 is turned on.

Thereby, an instruction to prepare for image capturing, such as autofocus (AF) processing, auto exposure (AE) processing, auto white balance (AWB) processing, and electronic flash pre-emission (EF) processing, is received. Furthermore, the switch SW2 is turned on by changing the release switch to a full-pressed state. Thereby, an instruction to perform image capturing is received.

The display unit 306 displays a viewfinder image during image capturing, displays the playback of captured and recorded image data, and displays text for interactive operations. It should be noted that the camera 300 does not necessarily need to incorporate the display unit 306 therein, and may be attached as an external monitor. The camera 300 can be connected to an internal or an external display unit 306, and includes at least a display control function to control the display of the display unit 306.

The communication I/F unit 308 is an interface for communicating with the image capturing control apparatus 201. The camera 300 of the First Embodiment can perform exchange of data with the image capturing control apparatus 201 via the communication I/F unit 308.

It should be noted that in the First Embodiment, the communication I/F unit 308 includes an interface for communicating with an information processing apparatus via a wireless LAN. The control unit 301 implements wireless communication with the image capturing control apparatus 201 by controlling the communication I/F unit 308. Note that the communication method is not limited to a wireless LAN.

The recording medium 307 records image data that has been output from the image capturing unit 302, may be configured to be detachable from the camera 300, or may be built into the camera 300. That is, the camera 300 is only required to include at least a unit for accessing the recording medium 307.

A computer program for operating the camera 300 is held in the non-volatile memory 303 as described above. It should be noted that the cameras 311 and 312 may have a similar configuration to that of the camera 300.

FIG. 4 is a functional block diagram related to data processing of video and audio of an image capturing control apparatus according to the First Embodiment. The image capturing control apparatus 201 executes the data conversion processing shown in the functional block showing in FIG. 4 by using the control unit 202 of the image capturing control apparatus 201 of FIG. 2. In the following explanation, the data conversion processing involves executing Read/Write operations by using the system memory 206, based on instructions from the control unit 202.

The image capturing control apparatus 201 inputs moving image data from cameras 300, 311, and 312 that have been connected externally via the communication I/F unit 207. The moving image data obtained from the image capturing unit 211 within the image capturing control apparatus 201 is also captured within the image capturing control apparatus 201. The moving image data is stored in the system memory 206. The data reception format received by a reception unit 401 can be, for example, RTMP format.

Next, video and audio data extracted from the RTMP-formatted data received by the reception unit 401, and sent to a subsequent DEMUX unit 402. The video and audio data extracted from the RTMP format can be, for example, in the FLV format and the like.

Next, the DEMUX unit 402 separates the video and audio, and sends the separated video to a decoding unit 403 and sends the separated audio to a decoding unit 404. The data format of the separated video and audio can be, for example, the H.264 format for video, and the AAC format for audio.

In the decoding unit 403, the video data is converted into a general-purpose format, and in the decoding unit 404, the audio data is converted into a general-purpose format. Because the video and audio data are subject to advanced encoding processes, they can be sent to a playback unit 405 by being decoded into a general-purpose data format.

Next, an encoding unit 406 applies an advanced encoding process to the video data that has been created for playback in the playback unit 405, and an encoding unit 407 applies an advanced encoding process to the audio data that has been created for playback in the playback unit 405. The data format after the encoding process can be, for example, the H.264 format for video, and the AAC format for audio. The data format in which to encode is determined according to a format that can be received by the distribution system 210.

Next, a MUX unit 408 integrates the video data encoded by the encoding unit 406 and the audio data that has been encoded by the encoding unit 407. The data format after integrating the video and audio can be, for example, the FLV format. Subsequently, a transmission unit 409 converts the integrated video and audio data into a data format for streaming, and transmits this converted data to the distribution system 210. The kind of data formats applied by the MUX unit 408 and the transmission unit 409 are determined according to formats that can be received by the distribution system 210.

In the above, data processing by the functional blocks within the image capturing control apparatus has been explained by using FIG. 4. However, the data formats are not limited thereto. That is, the data formats for video and audio are not only determined according to the output format of the camera and the receivable format of the distribution system, but can also be determined based on the processing speed of decoding and encoding, as well as the quality characteristics of the video and audio.

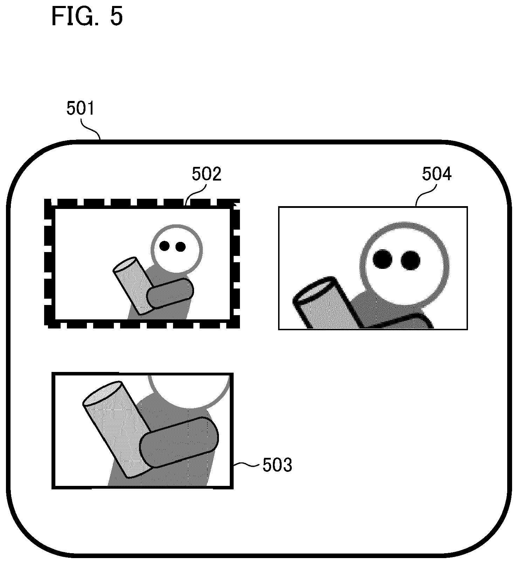

FIG. 5 is a diagram showing a display example of an image capturing control apparatus according to the First Embodiment. Reference numeral 501 of FIG. 5 shows one example of the screen of the display unit 209 in FIG. 2, and represents the entire screen of the liquid crystal display. Reference numeral 502 shows the video that has been input from the camera 300, reference numeral 503 shows the video that has been input from the camera 311, and reference numeral 504 shows the video that has been input from the camera 312, and the video data generated by the moving image data creation unit 301B in FIG. 3 is shown.

Reference numeral 502 shows the appearance of the subject as a whole, while reference numerals 503 and 504 show close-up views of a part of the subject. The thick frame around the video of reference numeral 502 indicates a focus display. Because any of the video data input from the plurality of cameras may be distributed, a focus display is performed so as to indicate which video data is being used for distribution.

The image capturing control apparatus in the First Embodiment detects a predetermined movement from the video received from the image capturing apparatus, and selects the video of a predetermined image capturing apparatus from among a plurality of image capturing apparatuses based on the detection result. Therefore, at the time of initial setup, the appropriate image capturing apparatus which determines a predetermined movement is determined from among the plurality of image capturing apparatuses, and each image capturing apparatus that is selected when a predetermined movement is detected is registered in advance.

It should be noted that in the following example, an example of determining (detecting) a predetermined movement by a single subject will be explained, but predetermined movement determination (detection) by a plurality of subjects is also acceptable. In addition, the subject is not limited to a human, but may also include an animal, a robot, and the like, provided that the predetermined movement of at least one subject is determined (detected). Furthermore, the predetermined movement need not be intentional on the part of the subject.

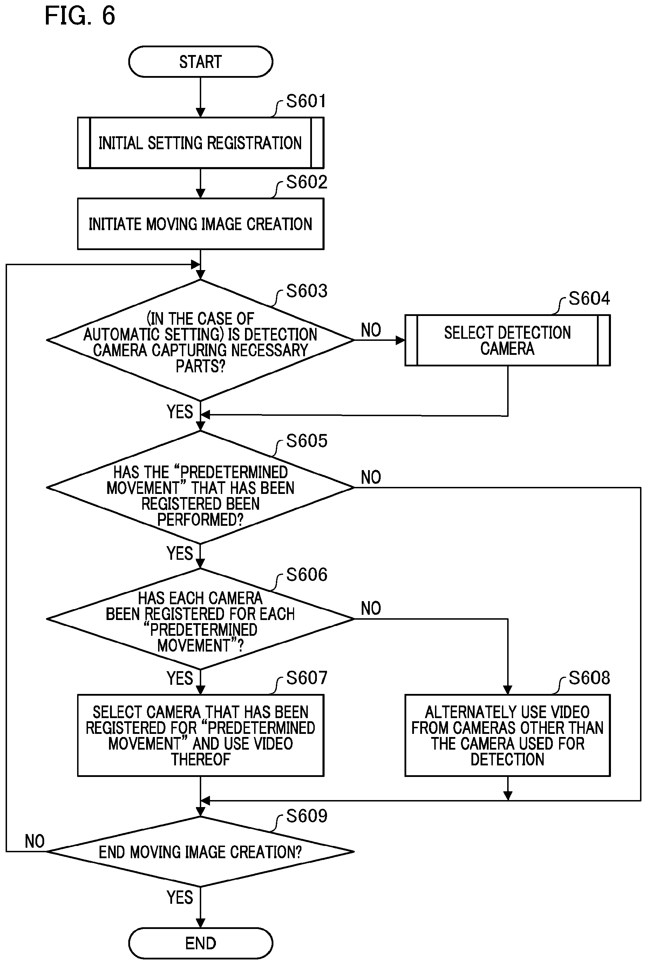

Next, a determination is made as to whether a predetermined movement has been performed, and based on the determination result, the video of an image capturing apparatus is selected, and moving image creation is performed. This process flow will be explained with reference to FIG. 6. FIG. 6 is a flowchart showing an operation example of video switching in a case in which a predetermined movement has been performed in the information processing method according to the First Embodiment.

It should be noted that the processing of FIG. 6 is implemented in the image capturing control apparatus 201 by a CPU serving as a computer within the control unit 202 executing a computer program that has been stored in the non-volatile memory 205.

The operation of the flowchart of FIG. 6 is initiated when a camera application is activated in the image capturing control apparatus 201, and the image capturing control apparatus 201 is set to an image capture standby state. In step S601, the control unit 202 performs an initial setting with respect to which camera will serve as the detection camera, and to the video of which camera will be selected in a case in which a predetermined movement has been detected.

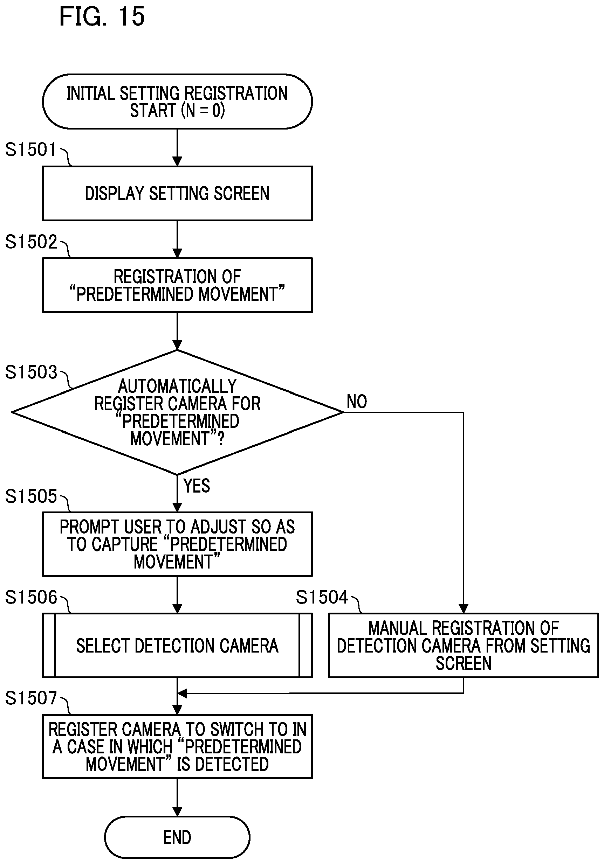

Here, step S601 functions as a registration step (registration unit) of registering the predetermined image capturing unit that has been associated with a predetermined movement. It should be noted that details of the flow of the initial setting will be described below in FIG. 15.

In step S602, the control unit 202 initiates moving image creation as explained in FIG. 4. In step S603, the image capturing apparatus determination unit 202A determines whether the camera, in a case in which the camera has been automatically set to detect a predetermined movement in step S601, is capturing the subject parts necessary for detecting the "predetermined movement" that has been registered in advance.

Here, a subject part is, for example, the entire body if the "predetermined movement" is a whole-body movement, or from hand to arm if it is a hand gesture. In addition, if the "predetermined movement" is the orientation of the face, the orientation of the gaze, or a facial expression, the subject part is the facial area, and the like. Thus, "predetermined movement" includes a movement related to a facial expression of a predetermined subject.

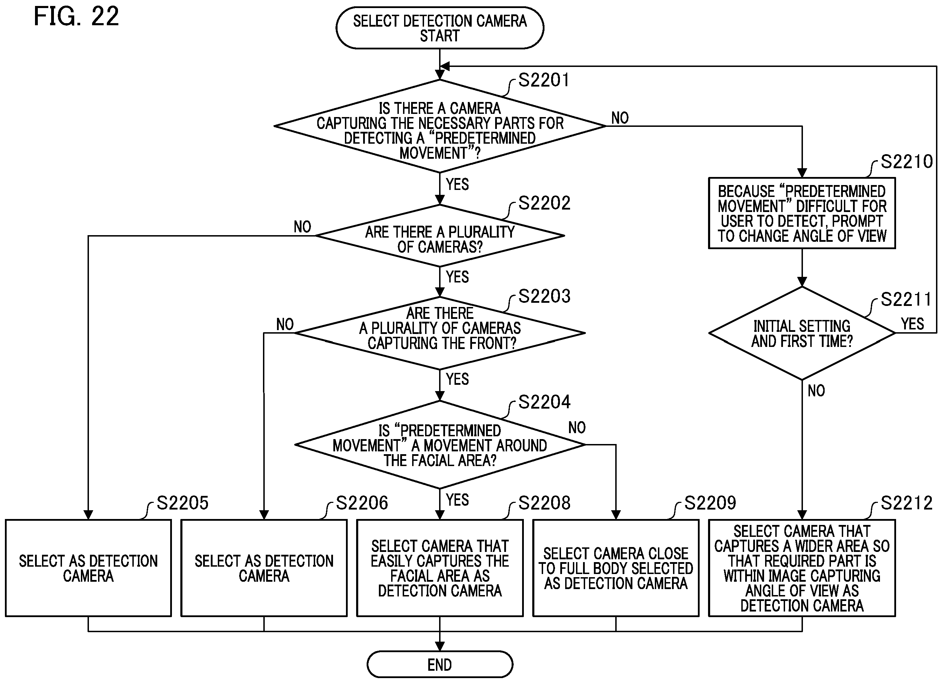

In the case of "Yes" in step S603, the processing proceeds to step S605, and in the case of "No" in step S603, the processing proceeds to step S604. In step S604, another camera that is able to show a subject part necessary for the detection of a "predetermined movement" can be changed to be the detection camera. Details of the flow for selecting a detection camera will be described below in FIG. 22.

In step S605, the control apparatus operation determination unit 202B performs a determination as to whether or not a "predetermined movement" determined in advance has been performed, based on the video received from the camera that has been made the detection camera. If the case of "No" in step S605, the processing proceeds to step S609, and in the case of "Yes" in step S605, the processing proceeds to step S606.

Here, step S605 functions as a determination step (determination unit) of determining whether the subject has made a predetermined movement determined in advance based on an image from a predetermined image capturing unit.

It should be noted that, in a case in which the determination of a "predetermined movement" recognizes and determines, for example, the shape of a peace sign, a facial expression, or a mouth expression, a video recognition technology such as AI or skeletal estimation technology may be used. In addition, in a case in which the orientation of the face is determined, or in a case in which the orientation of the gaze is determined, the determination may be made based on the angles of the face or gaze in the up, down, left, and right directions. Furthermore, for example, in a case in which the direction in which the body moves is determined, vector quantities may be used for the determination.

It should be noted that, in a case in which the shape of a mouth expression and the like is determined as a "predetermined movement", the movement of the mouth and lips may be recognized and determined. Furthermore, the content of vocalization may be determined based on the movement of the mouth and lips. Additionally, vocalization or the sound itself may be recognized as a "predetermined movement".

Furthermore, in a case in which an action of a hand is determined as a "predetermined movement", the content of sign language may be determined. Additionally, in a case in which a facial expression is determined as a "predetermined movement", the number of eye blinks per unit time or the pattern of eye blinks and the like may be determined. Furthermore, a combination of the above-described plurality of "predetermined movements" may be determined.

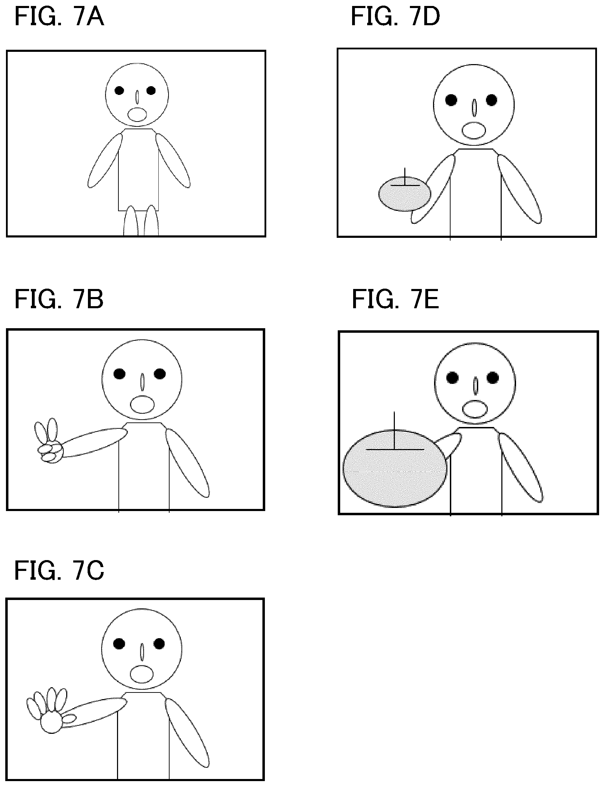

For example, a method of determination in a case in which a hand gesture such as a peace sign is determined will be explained with reference to FIGS. 7A to 7E. FIGS. 7A to 7E are diagrams for explaining an example of a case in which a determination is made based on a hand gesture.

FIG. 7A shows a state in which no "predetermined movement" is being made, FIG. 7B shows a state in which a peace sign, which has been registered in advance as a "predetermined movement", is being made, and FIG. 7C shows a state in which an open-handed sign, which has been registered as a "predetermined movement", is being made.

In a case in which the registered "predetermined movement" is a hand gesture as shown in FIGS. 7A to 7C, for example, when the hand movement changes from that of FIG. 7A to that of FIG. 7B, or from that of FIG. 7A to FIG. 7C, it is determined that a "predetermined movement" has been performed based on video recognition technology.

Next, FIG. 7D shows a state in which no "predetermined movement" is being made, and FIG. 7E shows a state in which a "predetermined movement", which has been registered in advance, is one of bringing an object to the foreground. As shown from FIG. 7D to FIG. 7E, even in a case in which the subject points out something they are holding to the foreground, it is determined that a "predetermined movement" has been made based on video recognition technology. Thus, "predetermined movement" includes a movement related to a predetermined hand gesture of a subject.

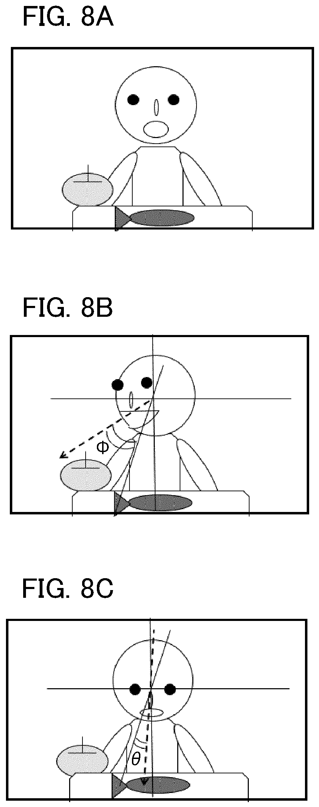

Next, a determination method in a case in which determination is based on the orientation of the face will be explained with reference to FIGS. 8A to 8C. FIGS. 8A to 8C are diagrams for explaining an example of a case in which a determination is made based on a direction of the face. FIG. 8A shows a case in which the orientation of the face is directed forward of the subject, FIG. 8B shows a case in which the subject is facing the right side from the point of view of the subject only by an angle of Φ, and FIG. 8C shows a case in which the subject is facing downward only by an angle of *θ*.

In a case in which the determination is based on the orientation of the face, a "predetermined movement" is considered to have been performed in a case in which the angle of the face, when viewed from the front, exceeds a predetermined angle (for example, Φ, *θ* > 20°) for a predetermined period. In the case of FIG. 8B, it is determined that there was a "predetermined movement" in the rightward direction, and in the case of FIG. 8C, it is determined that there was a "predetermined movement" in the downward orientation. Thus, a "predetermined movement" includes movements related to the orientation of a predetermined subject, particularly the orientation of the face or the orientation of the gaze.

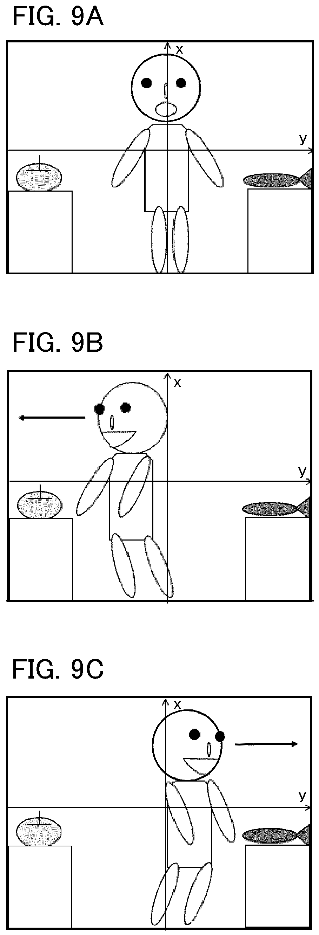

Next, a determination method in a case in which determination is based on a movement in a motion direction will be explained with reference to FIGS. 9A to 9C. FIG. 9A to 9C are diagrams for explaining an example of a case in which a determination is made based on a movement in a motion direction. FIG. 9A shows a case in which the subject is at a fixed position for image capture, FIG. 9B shows a case in which the subject has moved in the negative direction with respect to the y-axis in the figure, and FIG. 9C shows a case in which the subject has moved in the positive direction with respect to the y-axis.

In such cases in which the motion of a subject is accompanied by a movement vector equal to or greater than a certain value, it is determined that a "predetermined movement" has been performed. In the case of FIG. 9B, it is determined that there was a "predetermined movement" in the negative direction, and in the case of FIG. 9C, it is determined that there was a "predetermined movement" in the positive direction. Thus, a "predetermined movement" includes the motion of a predetermined subject. In addition, a "predetermined movement" may also include a motion or pose of a predetermined subject.

It should be noted that, as in FIGS. 7 to 9, because movements of the hand, orientation of the face, motion distance, and other facial expressions and the like change at any time, it is desirable to determine that a "predetermined movement" has been performed in a case in which a "predetermined movement" has continued for a certain period. It should be noted that in order to make the determination of a "predetermined movement" more accurate, adjustments may be made to the time of detection and the like and strength of detection, and the like.

It should be noted that, in the case of each of the states of B and C in FIGS. 7 to 9 are detected, which camera to select will be described below in step S606 to step S608.

In the First Embodiment, the control apparatus operation determination unit 202B determines a "predetermined movement" based on the video received from the camera that has been designated as the detection camera. However, the image capturing apparatus operation determination unit 301A of camera 300 may detect a predetermined "predetermined movement" and transmit this detection to the control unit 202 of the image capturing control apparatus 201 via the communication I/F unit 308 and the communication I/F unit 207, by which it is determined that a "predetermined movement" has been performed.

Next, in step S606, the video selection unit 202C determines whether a camera to switch to for each "predetermined movement" has been registered, based on the initial setting registration registered in step S601. In the case of "Yes" in step S606, the processing proceeds to step S607, and in the case of "No" in step S606, the processing proceeds to step S608.

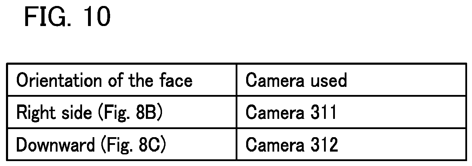

In step S607, a camera is selected for each "predetermined movement" that has been registered, and the video thereof is used. It should be noted that the camera to be used for each "predetermined movement" is registered in step S601, for example, as in FIG. 10.

FIG. 10 is a diagram for explaining an example in a case where there is a camera that has been registered for each orientation of the face. In the example shown in FIG. 10, a "predetermined movement" and a camera are registered in association with each other so that, in a case in which the orientation of the face is to the right as shown in FIG. 8B, the video from the camera 311 is used, and in a case in which the orientation of the face is downward as shown in FIG. 8C, the video from the camera 312 is used.

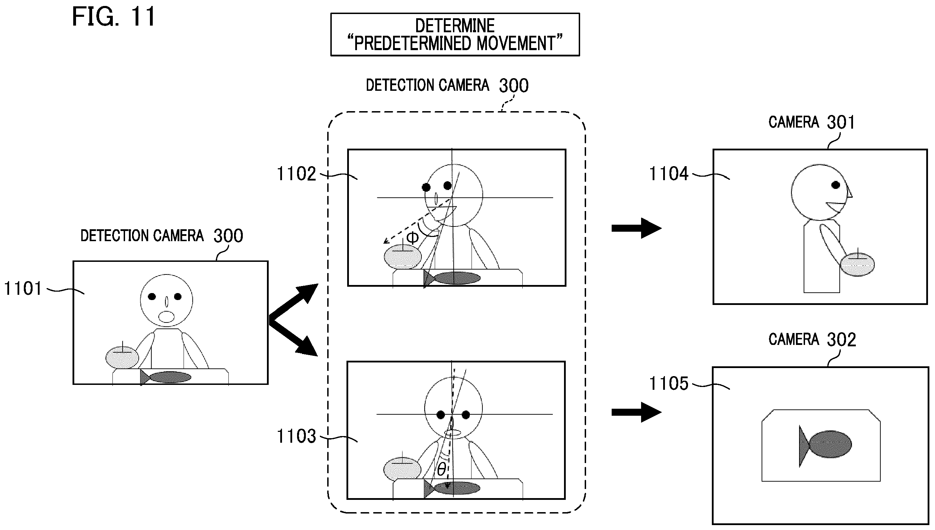

Next, step S607 will be explained with reference to FIG. 11 in the case of determining the orientation of the face. FIG. 11 is a diagram explaining an example of video switching in a case in which there is a camera that has been registered for each orientation of the face. Reference numeral 1101 of FIG. 11 is a video that has been captured by the camera 300 serving as a detection camera.

In step S607, the video selection unit 202C of the control unit 202 determines a "predetermined movement" as shown in 1102 (a case in which the face is oriented to the right) and 1103 (a case in which the face is oriented downward) from the video of the camera 300. Then, the camera that has been registered in correspondence to (linked with) this "predetermined movement" is selected, and the video from this selected camera is switched and output to either the display unit or the recording unit.

In a case in which it has been detected that the face is oriented to the right, as in 1102, the video 1104 from the camera 311 that was registered in FIG. 10 is selected, and in a case in which it is detected that the face is oriented downward, as in 1103, the video 1105 from the camera 312 is selected. At that time, the video of which camera is selected is displayed on the screen.

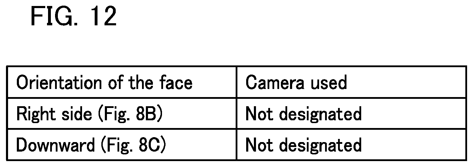

In step S608, the image selection unit 202C of the control unit 202 alternately uses the video of camera 311 (or 312) other than the camera 300 used for detection and the video of camera 300, and outputs the video to the display unit or the recording unit. The operation of step S608 will be explained with reference to FIG. 12 to FIG. 14. FIG. 12 is a diagram for explaining an example in a case in which there is no camera registered for each orientation of the face.

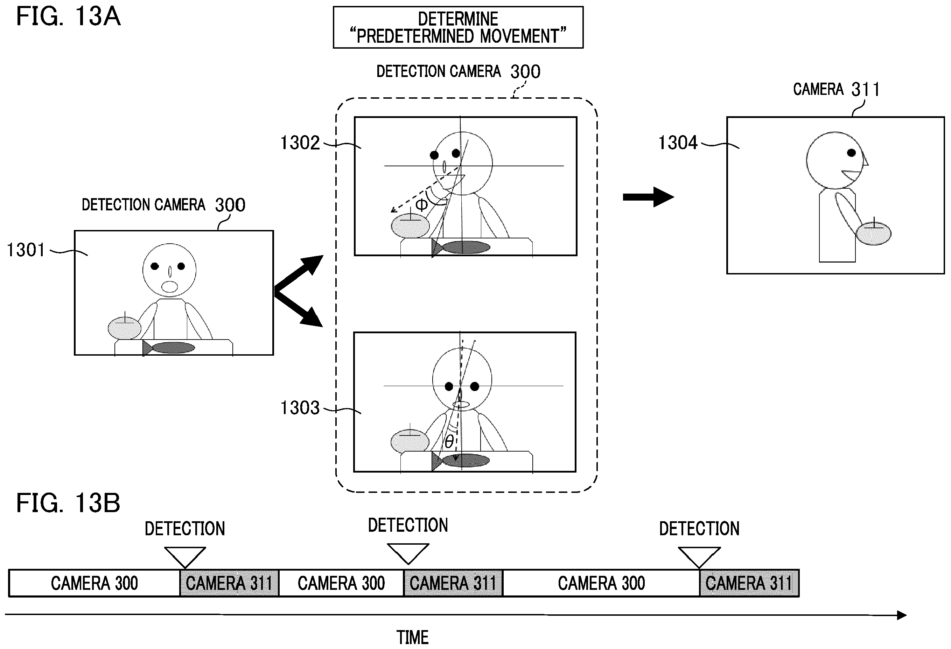

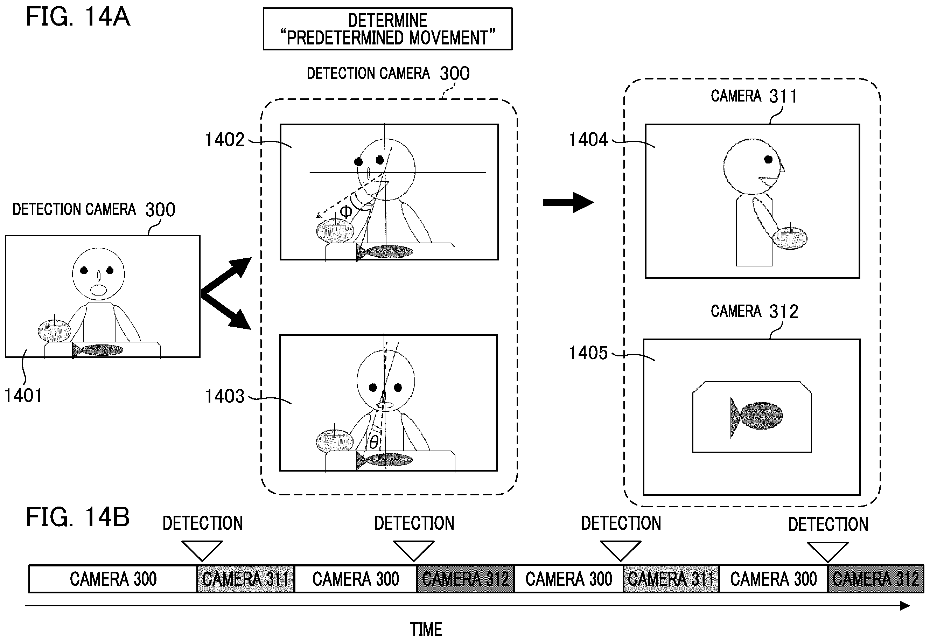

FIG. 13A and FIG. 13B are diagrams for explaining an example of switching video between two cameras in a case in which there is no camera that has been registered for each orientation of the face. FIG. 14A and FIG. 14B are diagrams for explaining an example of switching video between three cameras in a case in which there is no camera registered for each orientation of the face.

As shown in FIG. 12, in a case in which no camera is designated as having been registered for each orientation of the face, and in a case in which there are two cameras, when the detection camera detects a "predetermined movement," a switch is performed so as to use the video from a camera other than the detection camera, which is the camera 300, for a certain period.

That is, in a case in which two cameras, the camera 300 and the camera 311, are used as in FIG. 13, and in a case in which the camera 300 detects a "predetermined movement," as in the video of 1304, the video of the camera 300 that is used is switched to the video of another camera, the camera 311, for a predetermined time period. Here, the certain period can be arbitrarily designated by the user.

FIG. 13B shows a sequence of switching between the videos of two cameras. As shown in FIG. 13B, when a "predetermined movement" such as the orientation of the face being to the right (as in the video of 1102) or the orientation of the face being downward (as in the video of 1103) is detected while acquiring video by the camera 300, the video is switched to that of the camera 311 for a predetermined time period.

That is, in a case in which it has been determined that a "predetermined movement" has been made, the image from the predetermined image capturing unit that has been associated with the "predetermined movement", among the images from a plurality of image capturing units, is displayed for a predetermined period of time. It should be noted that at that time, the video of which camera is selected is displayed on the screen. That is, whether the video from the camera 300 is being displayed or the video from the camera 311 is being displayed is shown on the screen.

In contrast, in a case in which there are three cameras in use (camera 300, camera 311, and camera 312) as shown in FIG. 14A, and in a case in which the camera 300 detects a "predetermined movement", the video of the other two cameras in use, the camera 311 and the camera 312, are alternately inserted into the video of the camera 300.

FIG. 14B shows a sequence of switching between the videos of three cameras. It should be noted that any number of cameras other than the camera 300, which is the detection camera, may be used, and in that case, the number of video options from cameras that can be alternated increases in a case in which a detection is made.

It should be noted that in FIG. 14B, the screen displays information indicating the video of which camera has been selected. That is, it is displayed on the screen as to whether the video from the camera 300, the camera 311, or the camera 312 is being shown.

In step S609, the control unit 202 determines whether to end the moving image creation, and in a case in which the control unit 202 determines to end moving image creation, the control unit 202 ends the flow of FIG. 6, and in a case in which the control unit 202 determines not to end the moving image creation in step S609, the processing returns to step S603.

Here, steps S606 to S608 function as a selection step (selection unit) that outputs an image from a predetermined image capturing unit which has been associated with a predetermined movement to a display unit or a recording unit, in a case in which a predetermined movement has been determined.

Next, the initial setting registration in step S601 will be explained in detail based on FIG. 15. FIG. 15 is a flowchart showing an operation example of initial setting registration according to the First Embodiment. It should be noted that the operations of each step of the flowchart of FIG. 15 are performed by executing a computer program that has been stored in a memory by a CPU or the like serving as a computer within the image control apparatus.

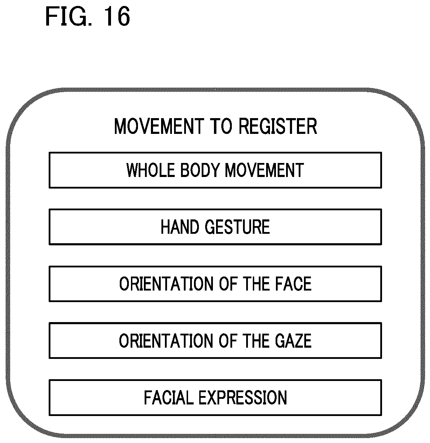

In step S1501, the control unit 202 displays a setting screen for performing switching registration. In step S1502, the image capturing apparatus determination unit 202A performs registration of a "predetermined movement". The method of registering a "predetermined movement" will be explained with reference to FIGS. 16 to 18.

FIG. 16 is a diagram for explaining an example of a UI for registering a "predetermined movement", and shows an initial screen for designating a movement in the UI for registering a "predetermined movement". In the example of FIG. 16, "whole-body movement", "hand gesture", "orientation of the face", "orientation of the gaze" and "facial expression" are present as options. The user selects and registers the movement of the subject to be detected from among these options as a "predetermined movement".

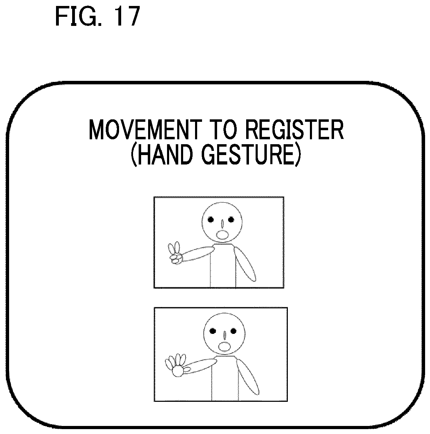

FIG. 17 is a diagram for explaining an example of a case in which a "hand gesture" is registered in the UI for registering a "predetermined movement", and in FIG. 17, a peace sign and an open-handed sign are shown as "predetermined movements", and the user can make a selection by clicking either the peace sign or the open-handed sign.

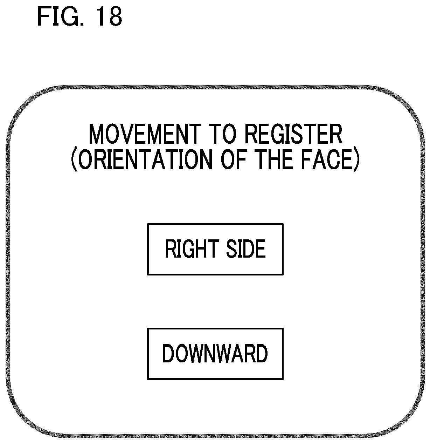

FIG. 18 is a diagram for explaining an example in which "orientation of the face" is registered in the UI for registering a "predetermined movement", and a case in which the face is oriented to the right and a case in which the face is oriented downward are shown as a "predetermined movement", and the user can make a selection by clicking either of these cases. Thus, for the "movement" selected in FIG. 16, further selections can be made as shown in FIGS. 17 and 18, and these selections can be registered.

It should be noted that hand gestures like those in FIG. 17, whole-body movements, and facial expressions can be actually captured and registered as "predetermined movements". Alternatively, for commonly recognizable movements such as the direction of the face as shown in FIG. 18, the direction of the gaze, and the direction of motion, a "movement" may be registered by selecting a direction and the like.

In step S1503 of FIG. 15, the image capturing apparatus determination unit 202A confirms with the user whether the camera that detects a "predetermined movement" should be automatically registered. In a case in which the registration is automatic, the processing proceeds to step S1505, and in a case in which the registration is not automatic, the processing proceeds to step S1504. In step S1504, the image capturing apparatus determination unit 202A manually registers the detection camera to be associated with the "predetermined movement".

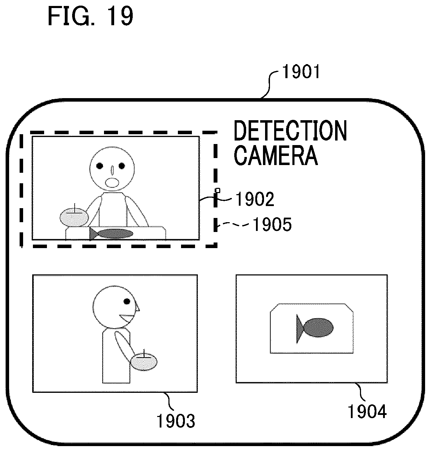

The UI for manual registration of a detection camera in step S1504 will be explained with reference to FIG. 19. FIG. 19 is a diagram for explaining an example of a UI for manual registration of a detection camera. The image capturing apparatus determination unit 202A displays a UI screen, such as that shown in FIG. 19, to enable the user to confirm and make a selection of the detection camera from the screen.

Reference numeral 1901 of FIG. 19 shows an example of the UI screen displayed on the display unit 209 of FIG. 2, and the UI screen represents the entire screen of the liquid crystal display. In FIG. 19, the video of the reference numeral 1902 is the video input from the camera 300, the video of the reference numeral 1903 is the video input from the camera 311, and the video of the reference numeral 1904 is the video that has been input from the camera 312, and the video data generated by the moving image data creation unit 301B of FIG. 3 is displayed. The user can select one from among these videos.

In FIG. 19, for example, clicking on the video 1902 of the camera 300 displays a frame 1905. Thus, by clicking on the camera video that is to be associated with a "predetermined movement", it is possible to select and register the camera video.

In step S1505, the image capturing apparatus determination unit 202A prompts the user to adjust the image capturing position so that the "predetermined movement" appears within the angle of view. In step S 1506, selection of a detection camera is performed. Further details will be described below with reference to FIG. 22.

In step S1507, the image capturing apparatus determination unit 202A performs registration of the camera to be switched to in a case in which the "predetermined movement" registered in step S1502 is detected. That is, the camera is designated and registered in accordance with the "predetermined movement" registered as shown in FIG. 17 and FIG. 18.

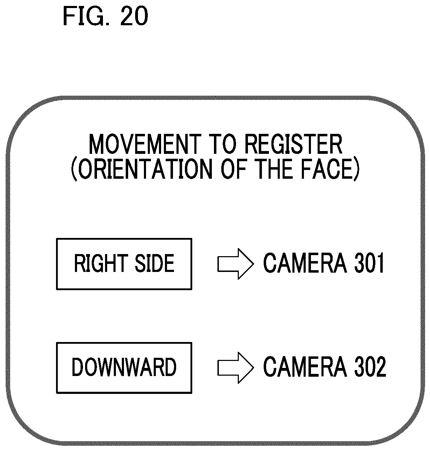

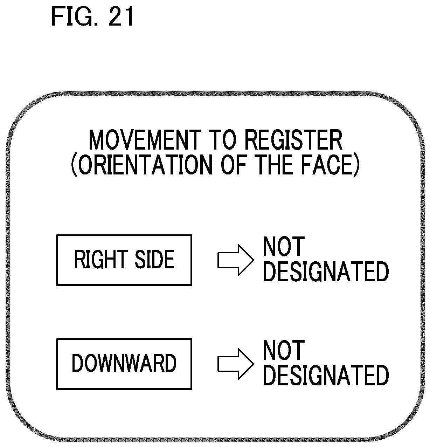

The registration of the designated camera in a case in which a "predetermined movement" has been detected will be explained based on FIG. 20 and FIG. 21. FIG. 20 is a diagram explaining an example of specifying a camera in the "predetermined movement" registration UI, and FIG. 21 is a diagram for explaining an example where no camera is designated in the UI for registering a "predetermined movement".

As shown in FIG. 20, a camera may be designated in accordance with the "predetermined movement," or as shown in FIG. 21, a camera may not be designated. A sequence for selecting the camera to be switched to, based on the registration thereof, is as described above in steps S607 and S608. It should be noted that, based on the "predetermined action" or "predetermined movement", the image capturing control apparatus 201 may infer and switch to the camera to be switched to as described below.

For example, as shown in FIG. 9, in the case of a determination based on a motion amount and the like, the camera located at the destination of the motion (motion direction, direction of movement) may be associated and this camera switched to. Alternatively, a movement such as fully extending the right arm or the left arm (as determined through skeletal estimation) may be associated with a camera that is installed to the left when viewed from the main camera, or a camera that is installed to the right when viewed from the main camera, and the associated camera may be switched to upon detecting such a movement.

Alternatively, in a case in which a finger is pointed, the camera located in the direction of the pointed finger may be switched to, and in a case in which an object is presented by moving the object forward, the camera closest to the object in that direction may be switched to. Alternatively, a switch may be made to a camera aligned with the orientation of the face or direction of the gaze.

Thereby, a switch can be made to the camera capturing the face or gaze from the front. Thus, the selection unit may output an image from the image capturing unit, which is present in the direction of the predetermined movement, to a display unit or a recording unit.

Furthermore, according to the content of the sign language performed by the subject, a switch may be made to the camera in the direction designated by the sign language. That is, in a case in which the predetermined movement is sign language, an image from the image capturing unit that has been designated by the content of the sign language may be output to a display unit or a recording unit.

Next, the selection of the detection camera in step S604 will be explained in detail with reference to FIG. 22. FIG. 22 is a flowchart for explaining processes for selecting a detection camera. It should be noted that the operations of each step of the flowchart of FIG. 22 are performed by executing a computer program stored in a memory by a CPU or the like serving as a computer within the image control apparatus. Furthermore, the flowchart in FIG. 22 is also used in the step S 1506 described below.

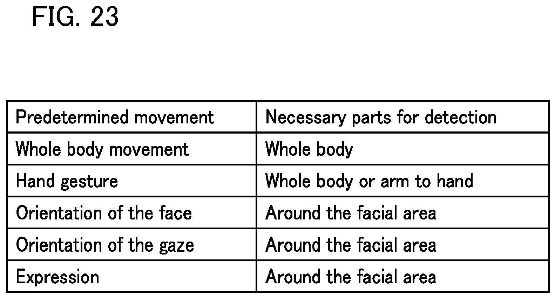

In step S2201, the image capturing apparatus determination unit 202A of the control unit 202 determines whether there is a camera capturing the necessary parts for detecting a "predetermined movement". From the "predetermined movement" registered in step S 1502 of FIG. 15, the necessary parts for detection are determined in accordance with FIG. 23, and it is determined from the camera video whether the necessary parts of the subject are being captured. FIG. 23 is a diagram for explaining an example of the parts required for detection for each "predetermined movement".

In a case in which the necessary part for detection is captured, the processing proceeds to step S2202, and in a case in which the necessary part for detection is not captured, the processing proceeds to step S2210. In step S2202, the image capturing apparatus determination unit 202A determines whether there is a plurality of cameras in which the required part is captured. If a plurality of cameras are capturing the necessary part, the processing proceeds to step S2203, and if only one camera is capturing the necessary part, the processing proceeds to step S2205.

In step S2203, the image capturing apparatus determination unit 202A determines whether there are a plurality of cameras that capture the front of the subject. The image capturing apparatus determination unit 202A confirms from the video of the camera, which has been determined to be capturing the necessary part in step S2202, whether the front of the subject is being captured, and determines if there are a plurality of cameras capturing the front of the subject.

It should be noted that in determining whether or not the front of the subject is being captured, a determination may be made by using information about the direction of the face, or a determination may be made by using image recognition such as AI, but the method is not limited thereto. In a case in which there are a plurality of cameras that capture the front of the subject, the processing proceeds to step S2204, and if there is only one camera capturing the front of the subject, the processing proceeds to step S2206.

In step S2204, the image capturing apparatus determination unit 202A determines whether the "predetermined movement" is a movement around the facial area. That is, in a case in which the "predetermined movement" registered in step S1502 is a facial expression, a direction of the gaze, or the orientation of the face, and the like, it is determined to be a movement around the facial area, and the processing proceeds to step S2208. In a case in which it has been determined that the movement is one other than a movement around the facial area, the processing proceeds to step S2209.

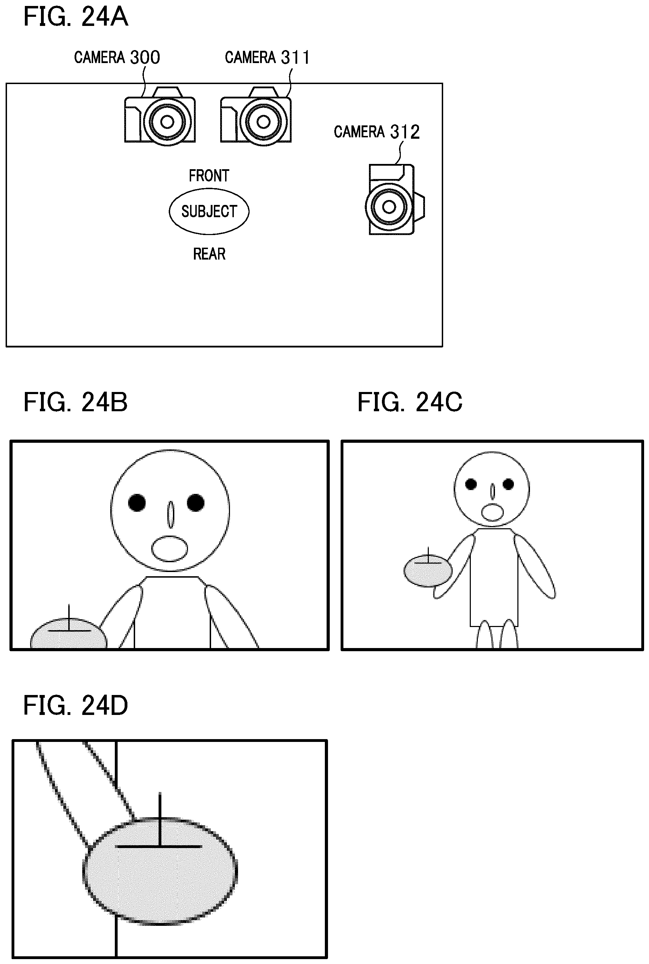

FIGS. 24A to 24D are diagrams for explaining a layout diagram of cameras and examples of video captured by each camera. FIG. 24A is a layout diagram of the cameras, FIG. 24B is the video captured by the camera 300, FIG. 24C is the video captured by the camera 311, and FIG. 24D is the video captured by the camera 312.

In step S2203, if it has been determined that there are a plurality of cameras that capture the front of the subject, for example, in the case of FIG. 24, the camera 300 and the camera 311 are determined to be the cameras that capture the front of the subject. In step S2205, the one camera that has been determined in step S2202 is selected as the detection camera.

In step S2206, the one camera that has been determined in step S2203 to be a camera that captures the front of the subject is selected as the detection camera. In step S2208, if a camera that easily captures the facial area is selected as the detection camera, the camera with the larger facial size in the images of FIG. 24B and FIG. 24C is selected as the detection camera. In this case, the camera 300 of video B is selected.

In step S2209, in a case in which a camera close to the full body is selected as the detection camera, the camera of the video in which the size of the face appears small and the full body appears large in images FIG. 24B and FIG. 24C is selected as the detection camera. In this case, the camera 311 of FIG. 24C is selected.

In step S2210, because there is no camera capturing a necessary part, making the "predetermined movement" difficult to detect, the image capturing apparatus determination unit 202A prompts the user to change the angle of view so that the necessary part for detecting the "predetermined movement" will be within the angle of view.

In step S2211, the image capturing apparatus determination unit 202A determines whether the setting is in an initial state and whether the transition to step S2211 is occurring for the first time, and in the case of "No", the processing proceeds to step S2212, and in the case of "Yes", the processing returns to step S2201. In step S2212, the image capturing apparatus determination unit 202A selects a camera that is capturing a wider area so that the required part is within the image capturing angle of view as the detection camera.

It should be noted that although FIG. 22 shows a case in which one camera is selected as the detection camera, a plurality of cameras may be used simultaneously as detection cameras. That is, when determining the "predetermined movement", the determination may be performed based on images from a single image capturing unit or a plurality of image capturing units.

For the determination of a "predetermined movement" based on the video from a plurality of cameras, in a case in which a determination is made by video recognition technology such as AI, the result from the detection camera with the highest degree of reliability need only be used among the determination results. In addition, the determination results of all the image capturing apparatuses may be used to perform a comprehensive determination of a "predetermined movement".

### (Second Embodiment)

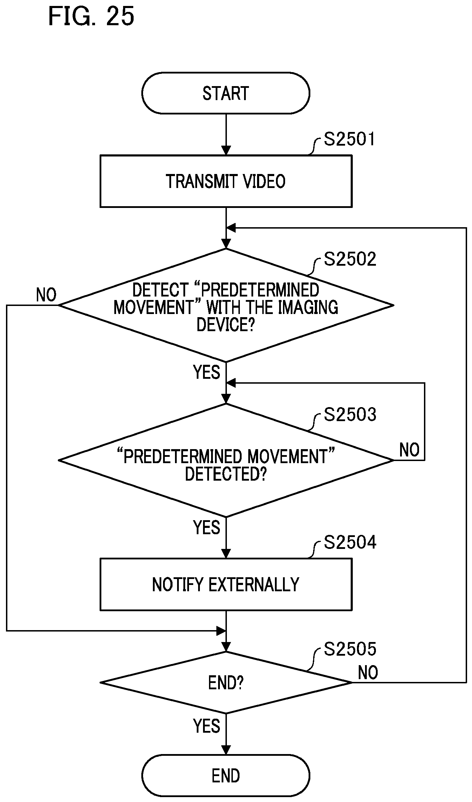

In a Second Embodiment, an example of an image capturing apparatus detecting a "predetermined movement" will be explained with reference to FIG. 25 and FIG. 6. FIG. 25 is a flowchart explaining an operation example of detecting a "predetermined movement" on the image capturing apparatus side according to a Second Embodiment.

It should be noted that each step in FIG. 25 is implemented in the camera 300 by a CPU (not shown) within the control unit 301 executing a computer program that has been stored in the non-volatile memory 303.

Next, based on FIG. 25, the flow in a case in which the image capturing apparatus detects a "predetermined movement" will be explained. In step S2501, the moving image data created by a moving image data creation unit 303B of the camera 300 is transmitted from the communication I/F unit 308 to the control unit 202 of the image capturing control apparatus 201 via the communication I/F unit 207 of the image capturing control apparatus 201.

In step S2502, the control unit 301 of the camera 300 determines whether to perform "predetermined movement" detection on the camera side. In a case in which the camera 300 performs "predetermined movement" detection, the processing proceeds to step S2503, and in a case in which the camera 300 does not perform "predetermined movement" detection, the processing proceeds to step S2505.

In step S2503, the image capturing apparatus operation determination unit 301A of the control unit 301 of the camera 300 determines whether a "predetermined movement" determined in advance has been performed. The "predetermined movement" is registered in advance in the non-volatile memory 303 or set externally through the communication I/F unit 308.

Similar to step S605, in a case in which a shape such as a peace sign, a facial expression, or a mouth expression is recognized and determined, a video recognition technology such as AI may be used to determine the "predetermined movement". Alternatively, in the case of the orientation of the face, or in the case of the orientation of the gaze, the determination may be made based on the angles of the face or gaze in the up, down, left, and right directions, and for example, in the case of the direction of body motion, determination may be made by using a vector quantity or the like.

In a case in which a "predetermined movement" is detected, the processing proceeds to step S2504, and in a case in which a "predetermined movement" is not detected, step S2503 is repeated until a "predetermined movement" is detected. It should be noted that step S2503 functions as a determination step (determination unit) to determine whether the subject has made a predetermined movement determined in advance based on an image that has been captured by the image capturing unit.

In step S2504, in a case in which the camera 300 detects a "predetermined movement", information indicating "detected" is transmitted from the communication I/F unit 308 to the control unit 202 of the image capturing control apparatus 201 via the communication I/F unit 207 of the image capturing control apparatus 201. Here, step S2504 functions as an output step (output unit) of outputting the determination result to an external apparatus in a case in which it has been determined by the determination unit that a predetermined movement has been performed.

Next, in step S2505, the camera 300 determines whether or not to end the processing (for example, power supply off, or the like), and in the case of "Yes" at step S2505, the flow of FIG. 25 ends, and in the case of "No" at step S2505, the process returns to step S2502 to continue the processing.

Next, the flow of processing of the image capturing control apparatus 201 in a case in which a "predetermined movement" is detected on the image capturing apparatus side will be explained based on FIG. 6. In a case in which a "predetermined movement" is detected on the image capturing apparatus side, a change is made to the "Select detection camera" processing of step S604 of FIG. 6 and of step S1506 of FIG. 15.

That is, when performing "Select as detection camera" in step S2205, step S2206, step S2208, step S2209, and step S2212 of FIG. 22, the camera that has been selected as the detection camera is notified by the image capturing control apparatus 201 that it has been selected as the selected camera.

Then, in the next step S605 of FIG. 6, the determination of whether a "predetermined movement" has been performed is not performed by the image capturing control apparatus 201 itself, but rather, the determination of step S605 is made by acquiring the detection result of the "predetermined movement" of the image capturing apparatus side from the processing of the flowchart of FIG. 25. Other processing may be the same as that of the flow that is shown in FIG. 6.

### (Third Embodiment)

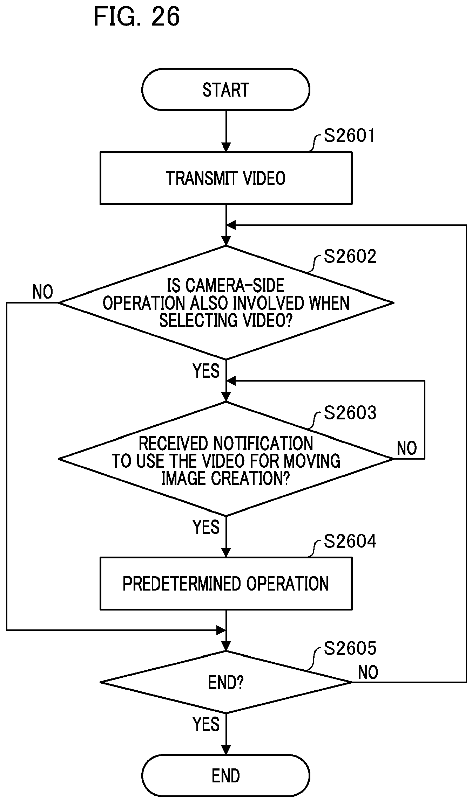

In a Third Embodiment, an image capturing apparatus performs a predetermined operation associated with a video selection in a case in which a video selection is made on the image capturing apparatus side. FIG. 26 is a flowchart explaining an example of implementing a predetermined operation in a case in which a video selection has been made on the image capturing apparatus side according to the Second Embodiment.

It should be noted that each step of FIG. 26 is implemented in the camera 300 by a CPU (not shown) within the control unit 301 executing a computer program stored in the non-volatile memory 303.

Based on FIG. 26, a flow of implementation of a predetermined operation on the image capturing apparatus side in a case in which a video selection has been made will be explained. In step S2601, the moving image data created by the moving image data creation unit 301B of the camera 300 is transmitted from the communication I/F unit 308 to the control unit 202 of the image capturing control apparatus 201 via the communication I/F unit 207 of the image capturing apparatus 201.

In step S2602, it is determined whether a camera-side operation is also involved when the video of camera 300 is selected as the video for moving image creation on the image capturing control apparatus 201 side. In the case of "Yes" in step S2602, the process proceeds to step S2603, and in the case of "No" in step S2602, the process proceeds to step S2605, and the video continues to be transmitted until a termination determination is made in step S2605.

An example of a "camera-side operation" that is determined in step S2602 includes, at least one of turning on the tally lamp provided in a camera, turning a power-saving mode on or off, starting or stopping recording, turning a power supply on or off, turning auto focus on or off, or flashing the flash.

These operations are performed during moving image capturing either to continue the capturing or to improve the image capturing quality. In a case of causing the camera 300 to perform "camera-side operations" as described above in coordination with the image capturing control apparatus 201, those "camera-side operations" are registered in advance in the non-volatile memory 303 of the camera 300.

In step S2603, it is determined as to whether the control unit 301 has received a notification from the image capturing control apparatus 201 to use the video for the creation of a moving image. In the case of "No", the processing is repeated until a notification is received. In a case in which a notification has been received, the process proceeds to step S2604.

In step S2604, the camera 300 executes a predetermined operation ("camera-side operation") as described in step S2602. Here, step S2604 functions as a control step (control unit) of performing a predetermined operation based on a signal received from an external apparatus in response to the output of the determination result to the external apparatus by the output unit.

Next, in step S2605, the camera 300 determines whether or not to end (for example, power supply off, or the like), and in the case of "Yes", the flow of FIG. 26 ends, and in the case of "No", the process returns to step S2602, and the processing is continued.

Next, the flow of processing of the image capturing control apparatus 201 in a case in which an image capturing apparatus performs a predetermined "camera-side operation" associated with video selection will be explained. In a case in which the image capturing apparatus performs a predetermined "camera-side operation" associated with video selection, an additional process is initiated by the image capturing control apparatus 201 after the processing of steps S607 and S608 in FIG. 6, wherein the selected camera, selected from among cameras 300, 311, or 312, is notified by the image capturing control apparatus 201 that the camera has been selected.

After implementing the flow of FIG. 6 in image capturing control apparatus 201, the flow of FIG. 26 is implemented on the image capturing apparatus side. It should be noted that the Third Embodiment is implemented in combination with either the First Embodiment or the Second Embodiment.

While the present invention has been described with reference to exemplary embodiments, it is to be understood that the invention is not limited to the disclosed exemplary embodiments. The scope of the following claims is to be accorded the broadest interpretation to encompass all such modifications and equivalent structures and functions.

In addition, as a part or the whole of the control according to the embodiments, a computer program realizing the function of the embodiments described above may be supplied to the information processing apparatus through a network or various storage media. Then, a computer (or a CPU, an MPU, or the like) of the information processing apparatus may be configured to read and execute the program. In such a case, the program and the storage medium storing the program configure the present invention.

Furthermore, the present invention includes, for example, at least one processor or circuit configured to perform the functions of the embodiments described above. It should be noted that a plurality of processors may be used to implement distributed processing.

Furthermore, in the embodiments described above, a case in which the image capturing control apparatus 201 is applied as an information processing apparatus has been explained as an example. However, the present invention is not limited thereto, and can be applied to any electronic device capable of receiving moving image data from a plurality of cameras and transmitting the moving image data to a distribution system. That is, the information processing apparatus of the above-described embodiments can be an electronic device such as a mobile phone terminal, a tablet terminal, a printer device provided with a viewfinder, a gaming console, a PC, and the like.

This application claims the benefit of Japanese Patent Application No. 2022-207380, filed on December 23, 2022, which is hereby incorporated by reference herein in its entirety.

An information processing apparatus capable of switching an imaging unit according to the intention of a subject or the like comprises a determination unit configured to determine whether a subject has made a predetermined movement based on images from at least one of a plurality of image capturing units, and a selection unit configured to select an image from a predetermined image capturing unit that has been associated with the predetermined movement from among images from the plurality of the image capturing units and output to a display unit or a recording unit, in a case in which it has been determined by the determination unit that the predetermined movement has been performed.

## Claims

1. An information processing apparatus comprising at least one processor or circuit configured to function as:
a determination unit configured to determine whether a subject has made a predetermined movement based on images from at least one of a plurality of image capturing units, and
a selection unit configured to select an image from a predetermined image capturing unit that has been associated with the predetermined movement from among images from the plurality of the image capturing units and output the image to a display unit or a recording unit, in a case in which it has been determined by the determination unit that the predetermined movement has been performed.

2. The information processing apparatus according to claim 1, wherein the predetermined movement includes a movement related to the orientation of a predetermined subject.

3. The information processing apparatus according to claim 1, wherein the predetermined movement includes a movement related to the orientation of the face or the orientation of the gaze of a predetermined subject.

4. The information processing apparatus according to claim 1, wherein the predetermined movement includes a movement related to a hand gesture of a predetermined subject.

5. The information processing apparatus according to claim 1, wherein the predetermined movement includes a movement related to a facial expression of a predetermined subject.

6. The information processing apparatus according to claim 1, wherein the predetermined movement includes a motion or pose of a predetermined subject.

7. The information processing apparatus according to claim 1, wherein the predetermined movement includes sign language, and the selection unit is further configured to output an image from the predetermined image capturing unit that has been designated by the content of the sign language to a display unit or a recording unit.

8. The information processing apparatus according to claim 1, wherein the predetermined movement includes a motion of a predetermined subject.

9. The information processing apparatus according to claim 1, wherein the selection unit selects an image from the image capturing unit that is present in the direction of the predetermined movement and outputs the image to a display unit or a recording unit.

10. The information processing apparatus according to claim 1, wherein the determination unit is configured to determine the and outputs movement made by at least one subject.

11. The information processing apparatus according to claim 1, wherein the determination unit is configured to perform a determination based on an image from one image capturing unit or images from a plurality of image capturing units.

12. The information processing apparatus according to claim 1, wherein the at least one processor or circuit is further configured to function as a registration unit configured to register the predetermined image capturing unit that has been associated with the predetermined movement.

13. The information processing apparatus according to claim 1, wherein the selection unit is configured to display for a predetermined time an image from the predetermined image capturing unit that has been associated with the predetermined movement among images from a plurality of image capturing units, in a case in which it has been determined by the determination unit that a predetermined movement has been performed.

14. An image capturing apparatus comprising:
an image capturing unit, and
at least one processor or circuit configured to function as:
a determination unit configured to determine whether a subject has made a predetermined movement based on images from at least one of a plurality of image capturing units,
an output unit configured to output a determination result to an external apparatus in a case in which it has been determined by the determination unit that the predetermined movement has been performed, and
a control unit configured to perform a predetermined operation based on a signal received from the external apparatus in response to the output of the determination result to the external apparatus by the output unit.

15. An information processing method, the method comprising:
determining whether a subject has made a predetermined movement based on images from at least one of a plurality of image capturing units, and
based on the determining, selecting to output an image from a predetermined image capturing unit that has been associated with the predetermined movement from among images from the plurality of the image capturing units to a display unit or a recording unit, in a case in which it has been determined that a predetermined movement has been performed.

16. A non-transitory computer-readable storage medium configured to store a computer program comprising instructions for executing following processes:
determining whether a subject has made a predetermined movement based on images from at least one of a plurality of image capturing units, and
based on the determining, selecting to output an image from a predetermined image capturing unit that has been associated with the predetermined movement from among images from the plurality of the image capturing units to a display unit or a recording unit, in a case in which it has been determined that the predetermined movement has been performed.
